# EUROPEAN PATENT SPECIFICATION

(11) **EP 0 896 710 B1**
(45) Date of publication and mention of the grant of the patent: **01.09.1999**
(21) Application number: 97919542.7
(22) Date of filing: 24.04.1997
(51) Int. Cl.: G10L 5/06

(54) **AUTOMATIC SPEECH RECOGNITION**
AUTOMATISCHE SPRACHERKENNUNG
RECONNAISSANCE AUTOMATIQUE DE LA PAROLE

(30) Priority: 03.05.1996 EP 96303141
(43) Date of publication of application: 17.02.1999
(73) Proprietor: BRITISH TELECOMMUNICATIONS public limited company, London EC1A 7AJ (GB)
(72) Inventor: HOVELL, Simon, Alexander, Ipswich, Suffolk IP4 5EF (GB)
(74) Representative: Leng, Francis Edward
(86) International application number: GB9701134
(87) International publication number: WO9742626

(56) References cited:
- EP-A- 0 590 173
- SPEECH PROCESSING 1, SAN FRANCISCO, MAR. 23 - 26, 1992, vol. 1, 23 March 1992, INSTITUTE OF ELECTRICAL AND ELECTRONICS ENGINEERS, pages 569-572, XP000341210 YOUNG S J: "THE GENERAL USE OF TYING IN PHONEME-BASED HMM SPEECH RECOGNISERS"
- SPEECH PROCESSING 2, ADELAIDE, APRIL 19-22, 1994, vol. 2, 1994, IEEE, pages 125-128, XP002016226 P.C. WOODLAND ET AL.: "LARGE VOCABULARY CONTINUOUS SPEECH RECOGNITION USING HTK"
- SPEECH PROCESSING 2, ADELAIDE, APRIL 19-22, 1994, vol. 2, 1994, IEEE, pages 153-156, XP002016227 W. CHOU ET AL.: "AN ALGORITHM OF HIGH RESOLUTION AND EFFICIENT MULTIPLE STRING HYPOTHESIZATION FOR CONTINUOUS SPEECH RECOGNITION USING INTER-WORD MODELS"

## Description

This inventions relates to automatic speech recognition, and more particularly it relates to automatic speech recognition using context related elements such as triphones.

Automated speech recognition has many potential applications, such as dictation systems and for the speech control of a variety of mechanisms such as video recorders. Automatic speech recognition could also be used for the remote control of household equipment, e.g. by telephone. There are many telephone services which can be implemented by automatic speech recognition coupled with synthetic speech, e.g. a wide variety of services using an automated index. In many applications a failure to recognise the speech is regarded as an acceptable result. For example, a speaker may make a mistake and, if there is a fault, it may not be that of the automatic system. A system is often designed so that faulty or inappropriate utterances are not recognised, e.g. the system may ask for a repeat.

Speech recognition is usually carried out by matching parameterised samples of a speech signal with a network which defines a plurality of paths wherein each path represents a possible utterance. Parameterised speech is well understood in the art of speech recognition and persons skilled in the art will be aware of several techniques for parameterisation. The paths are formed of successions of model speech elements, e.g. model phonemes. The term "model" indicates that the element is represented in a form which is suitable for direct comparison with a parameterised sample. Each comparison generates an elementary metric or metrics which indicate the similarity between the model element and the parameterised sample. The elementary metrics are accumulated over the paths and partials paths and this establishes which paths or partial paths most closely resemble the received signal. To begin with, there are many potential paths and the recognition is equivalent to selecting which alternative constitutes the best match for the received signal.

Complicated or elaborate embodiments of automatic speech recognition need to provide a large number of alternatives for the matching process, i.e. they must use many paths. A path can be regarded as a series of partial paths. Because many utterances start the same and then diverge many paths start with the same partial path and then they diverge again and again so that a partial path may be common to many complete paths. Thus it is convenient to store the paths as a network which defines all the paths and partial paths included therein. The recognition process is equivalent to finding the best path through the network.

This invention uses a dynamic network. This means that only an initial network is defined when the recognition begins and partial paths are added to the network from time to time, e.g. at the ends of the various partial paths, and each extensions usually takes the form or a complete unit, e.g. a complete word or a syllable. These units are formed of symbolic elements e.g. (phonemes) which are not suitable for matching against parameterised samples. Before the symbolic elements can be used for recognition they must be converted to model elements, i.e. to a form which can be matched against the parameterised samples.

In simple automatic speech recognition, there is a one-one correspondence between the symbolic and the model elements. This makes conversion easier but it tends to degrade the matching because in practice the pronunciation of an element such as a phoneme depends on its context. Using model elements that represent a symbolic phoneme in the context of its neighbouring symbolic phonemes produces a marked improvement in recognition accuracy. In other words a symbolic element (phoneme) has a variety of different pronunciations and a plurality of different model elements (phonemes) is needed to represent this variety, i.e. one model element (phoneme) is needed for each of the pronunciations. This invention uses context dependent model elements and, more particularly, model elements which depend on the symbolic elements which follow. In the preferred embodiment, this invention uses triphones, that is each model phoneme relates to only one symbolic phoneme but the preceding and following symbolic phonemes are taken into account.

The invention will now be described by way of example with reference to the accompanying drawings in which:-
Figure 1 illustrates a store for converting symbolic phonemes to model phonemes using triphones;
Figure 2 shows the end of a partial path;
Figure 3 shows a tree, in symbolic phonemes, for addition to a network;
Figure 4a shows the tree of Figure 3 converted to model phonemes;
Figure 4b shows an alternative to Figure 4a wherein the place markers are removed from the tree;
Figure 5 illustrates equipment for carrying out the method;
Figure 6 is a flow sheet for the method, and
Figure 7 illustrates the invention in the context of a telecommunications system.

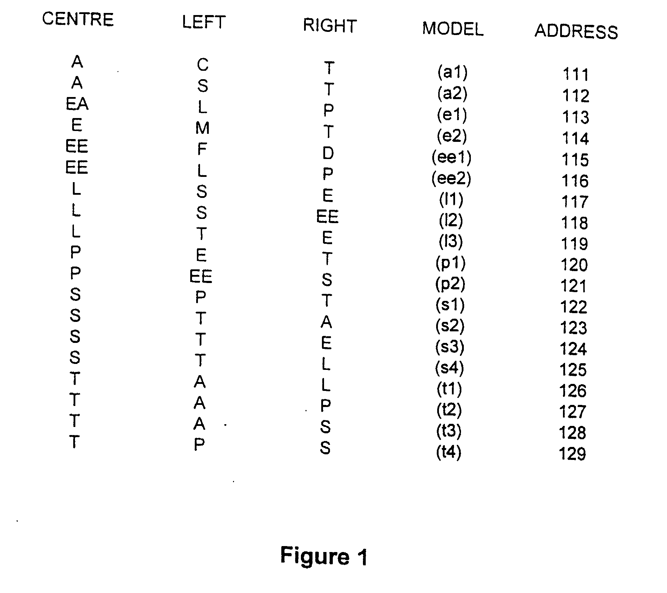

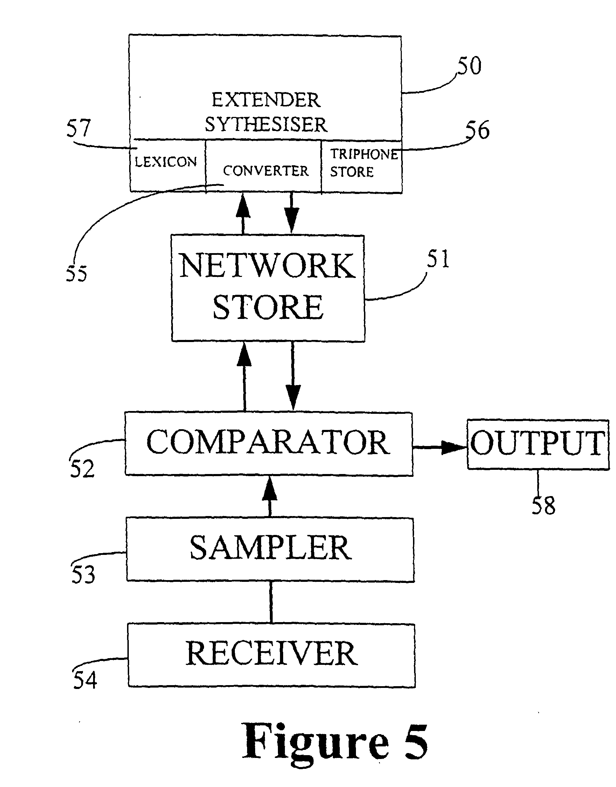

Figure 1 illustrates the content of a triphone store which also appears as item 56 of Figure 5. Realistically, many more entries are included but only a few can be shown. In particular, items representing non-speech features such as "breath sound" and "channel noise" are usually included. The items shown in Figure 1 are all triphones, i.e. each item comprises the phoneme itself together with its left neighbour (predecessor) and right neighbour (successor.)

Figure 1 has a column headed "CENTRE" which identifies the symbolic phoneme to be converted. The columns headed "LEFT" and "RIGHT" identify the predecessor and the subsequent phonemes. The "models" are indicated by lower case in brackets because it is impractical to display the substantial amount of data needed to define a model (in any case the models are conventional and well known in the art.) The models are numbered and this emphasises that there are a plurality of model phonemes to each symbolic phoneme. The use of triphones requires that the symbolic phoneme be identified in the column headed "CENTRE" and the symbolic phonemes to the left and right be identified in the columns so headed. This identifies the appropriate triphone to convert the central element in its context.

Consider the conversion of the words "LEAPT" and "MET". Although conventional spelling suggests otherwise "EA" in "LEAPT" is not only a single phoneme but it is the same phoneme as "E" in "met". However the contexts are different and it is clear that the addresses 113 and 114 of Figure 1 make the necessary conversion based on a triphone. In neither word can the symbolic phoneme "T" be converted because there is no right phoneme to define the appropriate triphone. This invention uses a dynamic network and each partial path of the network is extended by one unit (e.g. a word) at a time. The unit is in symbolic phonemes and it is necessary to convert to model phonemes before comparison with samples is possible. When the conversions are made each partial path, (and there are many) has a final symbolic phoneme which is not (yet) part of the triphone. Because the contexts of the last phonemes are not defined they cannot be converted. This is a major problem for the use of context related elements in dynamic networks. When the context is a triphone the terminology "cross-word triphones" is often used because the left and right elements of the triphone are located in different words. The problem is then known as "the problem of cross-word triphones".

According to this invention, which is more fully defined in the claims, a "place marker" is employed to overcome the problem. A place marker is similar to a model phoneme in that is can be placed in a path but it contains none of the information needed for comparison. Thus it can be regarded as a dummy model. More importantly the place marker identifies a symbolic phoneme, e.g. one which was not converted when it was placed in the network (the reason for the non-conversion being that the context was not adequately determined at the time of the insertion.)

A place marker identifies places for future path extensions and it can also be used to identify the end of a partial path.

Since the symbolic element identified by a place marker is not suitable for comparison with a parameterised sample, a place marker will need to be updated after it has been incorporated into a path and this updating will take place at one or more subsequent extensions of the path (and hence the network of which the path is part.) It almost always occurs that the path will branch from the place marker at the time of the extension. This means that there will usually be plurality of extensions branching from the place marker. It is to be expected that a plurality of extensions would constitute a plurality of different contexts for the place marker and, therefore, a plurality of different model elements will be required because the model elements are context related. Two methods of updating, i.e. replacement and continuation, will now be described.

### REPLACEMENT METHOD

In the replacement method, the place marker is taken out of its path and replaced by a context related model element which the place marker defined as a symbolic element. As mentioned above, this replacement requires a plurality of different model elements in order to cope with the plurality of different contexts. Once the place marker has been removed its location is lost and no further extensions can be made from that location. It is, therefore, appropriate to make all of the different extensions on the same occasion.

### CONTINUATION METHOD

In the continuation method, the place marker remains in the network as long as its path remains. The place marker is "blank" in respect of information needed for comparison with parameterised samples and, therefore, the place marker plays no part in the comparison and it does not affect the selection of the path. The updated extensions continue from the place marker and, as necessary, several different extensions may continue from the same place marker. Each extension conveniently begins with the element identified in the place marker and, since the context of this element is now fully specified, the element can be converted to the appropriate context related model form. Clearly, the place marker will not be at the end of the path after the path has been extended. Nevertheless the place marker remains in the path and it can be located and used for further extensions in which extra branches are created.

If desired, a place marker may contain additional information, e.g. an identification of the word or unit terminated by the place marker. (When the extension method is used the place marker remains in the path and any additional information contained therein will also remain in the path. This information can, therefore, be accessed if it is required.)

The invention includes the following methods:
(a) Extending paths and networks using place markers,
(b) Recognition of speech using dynamic networks which include place markers,
(c) Control of equipment by speech recognised by (b),
(d) Methods (a) to (c) including the use of telecommunications.

The invention also includes apparatus for carrying out methods (a) to (d) as indicated above.

The use of place markers in accordance with the invention will now be described with reference to Figures 1 to 5.

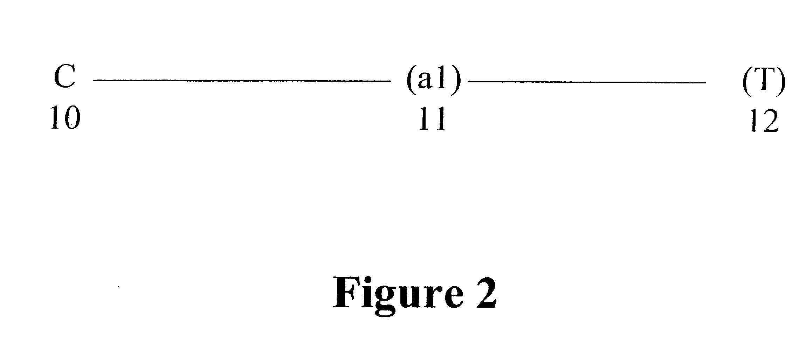

Figure 2 relates to the extension of one partial path of a network and, (for illustration) it will be assumed that the partial path ends with the word "cat". Eventually all of the paths will be extended and the process is iterative because each of the extensions is carried out in substantially the same way. Since all of the iterations are substantially the same only one will be described, i.e. the one which extends this partial path.

The extension under consideration is achieved by adding a plurality of words to the end of the partial path shown in Figure 2 and the "C" (10) indicates the remainder of the network. Since "C" was converted during a previous iteration it plays no part in this (or any other future) iteration. The "A" (11 of Figure 2) of "cat" was also converted and it is shown as the model phoneme (a1), address 111 of Figure 1. Nevertheless, it is needed to help define the triphone which follows.

The "T" of cat (12 of Figure 2) has not (yet) got a successor so it cannot be converted to a model based on a triphone. It was, however, necessary to place the "T" into the net at a previous iteration and therefore a place marker was used. The place marker 12 also marks the end of a partial path and it cannot be matched with parameterised samples.

The equipment (which is shown in Figure 5 and described in greater detail below), includes a extender 50 which includes a lexicon 57 and the triphone store 56 which is illustrated in greater detail in Figure 1. (The lexicon 57 and the triphone store 56 are both storage areas for signals representing the various items. These signals are in a form suitable for automatic processing.) The lexicon 57 contains all the words which are acknowledged by the equipment; it may also contain other units such as syllables or any items which are of significance to a particular application. The extender 50 can extend any partial path included in the network by outputting units, e.g. words, for the extension.

To illustrate the present iteration it will be assumed that the extender outputs the following list of four words.
SAT
SL(EE)PS
SLEPT
L(EA)PT

Four words are enough for illustration but a "real" list might be much longer. In the words "sleeps" and "leapt", the brackets indicate that "ee" and "ea" are single symbolic phonemes even though there are two letters.

In order to prepare for conversion into model phonemes followed by addition to the network these words are put into the form of a tree. The tree is to be added at the location of the place marker 12 of Figure 2 and the time has now come for the symbolic phoneme contained in the place marker 12 to be converted to a model phoneme. Therefore the place marker 12 and its preceding phoneme 11 are incorporated into the tree. Specifically, the preceding phoneme 11 and the place marker 12 constitute the start of the tree.

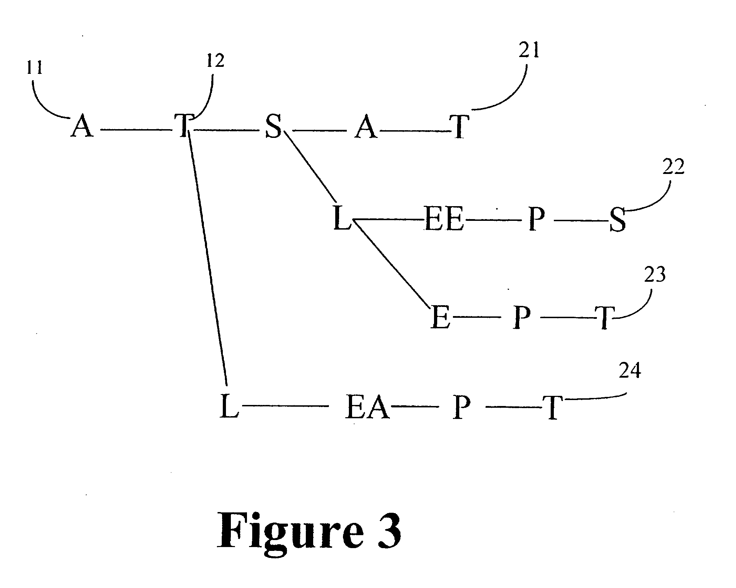

The tree is formed from the four words, the place marker 12 and the preceding phoneme 11. The tree is shown in Figure 3.

All of the items shown in Figure 3 except "ends" 21, 22, 23 and 24 and the initial letter "A" (11) are in defined triphones which are contained in the store 56 (see also Figure 1.) Therefore the conversions are defined. The initial "A" does not need to be converted because it is already converted into a model phoneme. It is needed in the tree because it defines the conversion of item 12 which was obtained from the place marker 12 of Figure 2. The ends 21, 22, 23 and 24 cannot be converted into triphones because the following elements are not yet determined. The non-conversion would be a major obstacle because the tree of Figure 3 cannot be merged into the network without complete conversion. According to this invention the ends 21, 22, 23 and 24 are converted into place markers and the network can accommodate place markers.

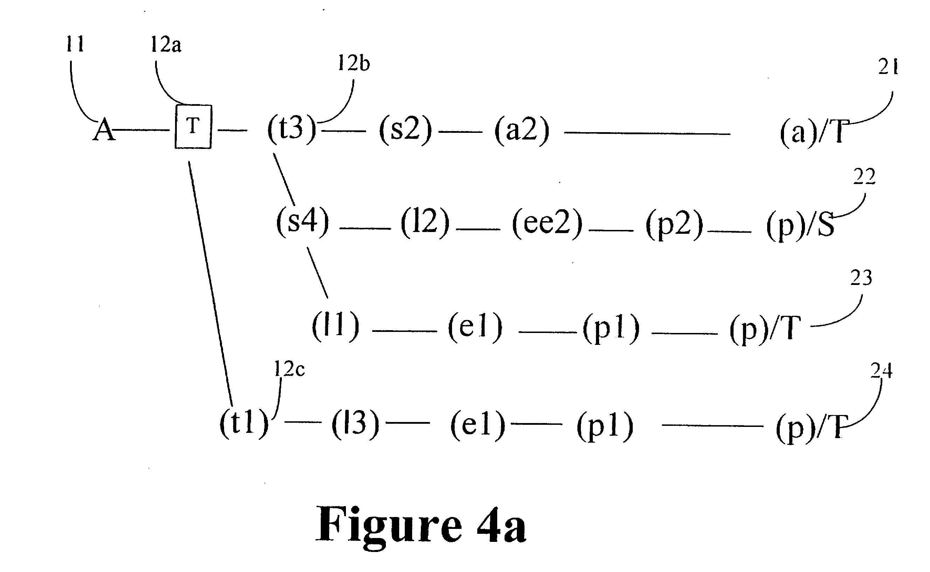

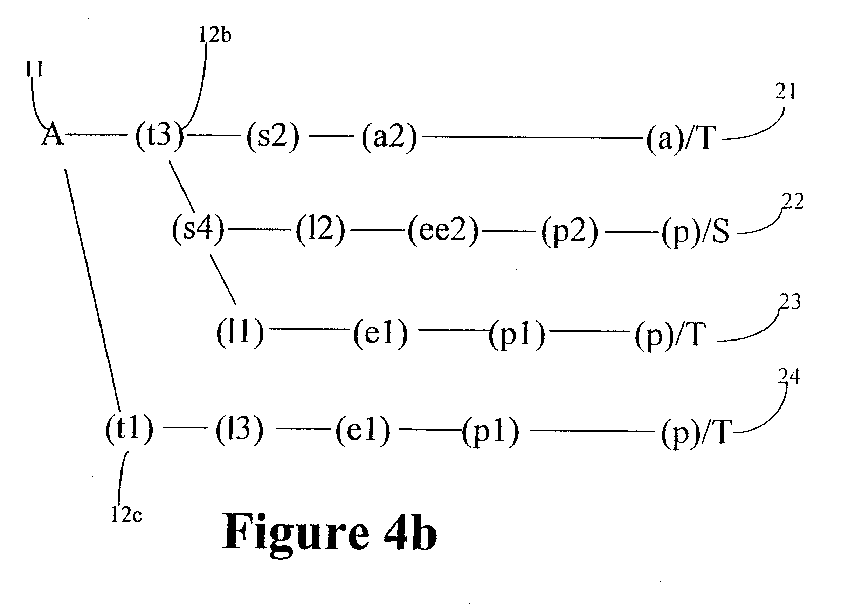

Figure 4 shows the result of the conversion and the merging with the previous network. Item 11 is the previous "last converted" element. Item (12a) is the old place marker which is retained unchanged. The symbolic phoneme contained in the place marker 12a is now converted into two different model phonemes because the example illustrates two different contexts. Thus, in one branch, the symbolic phoneme of the place marker 12a becomes model phoneme 12b from address 128 of the phoneme store 56. This give the model phoneme (t3) for T preceded by A and followed by S. In a different branch of the network the symbolic phoneme from the place marker 12a becomes (t1) which is item 12c from address 126 of the phoneme store 56. This version is selected because, in this branch of the network, T is preceded by A and followed by L. The old network has now branched so that there are now four new place markers 21, 22, 23 and 24. These will serve as starting points for extension in future iterations when the symbolic phonemes contained in them will be replaced by model phonemes as described above.

As can be seen from Figure 4a the place markers remain in the network after conversion. These place markers contain no information for comparison with samples and, therefore, they do not affect the choice of the path. Nevertheless, the place markers occur at places where the network branches and they can be used to define the network. As mentioned above the place markers contain a symbolic phoneme for conversion and they may contain extra information, e.g. the preceding phoneme to define a triphone. As is illustrated by the place markers 21 to 24, place markers correspond to units inserted into the network and, if desired, a place marker may identify the unit from which it was derived.

In an alternative embodiment (illustrated in Figure 4b) the place markers are removed when the phonemes contained in them are converted to models. Clearly, when the place markers are removed there is no information associated with place markers but, as can be seen from Figure 4b, the structure of the network is still defined.

In another alternative, not illustrated, the integrity of the units is preserved. The tree shown in Figure 3 is not formed because each unit is separately converted to model phonemes and place markers. The converted units are then added to the network as single entities.

The equipment used to extend the network is illustrated in Figure 5. It comprises an extender 50 for extrapolating an existing path. The extender 50 includes a lexicon 57 for storing signals which represent the symbolic phonemes of units such as words and syllables. It also includes a triphone store 56 for storing the signals used by a converter 55 which converts symbolic phonemes to model phonemes. The is operatively connected to a network store 51 so that it can add extensions to the network stored therein. The extender can also obtain the ends of partial paths, e.g. symbolic phonemes contained in place markers from the network store 51 to constitute input for the extensions.

The equipment also includes a receiver 54 for acquiring a speech signal for sampling and parameterisation. The signal is preferably in the form of a digital waveform; if an analogue signal is provided an analogue-to-digital converter (not shown) is included. A sampler 53 carries out the parameterisation, and there are usually 50 to 100 samples per second. (Telephony digital speech usually has 8000 samples per second.) The comparator 52 matches the samples with the network held in the store 51 until the best path has been identified and this is output to the interface 58 which is adapted to control attached equipment (not shown in Figure 5) or to provide confirmation of the identification, e.g. as an audio or visual signal, optionally by a telecommunications system.

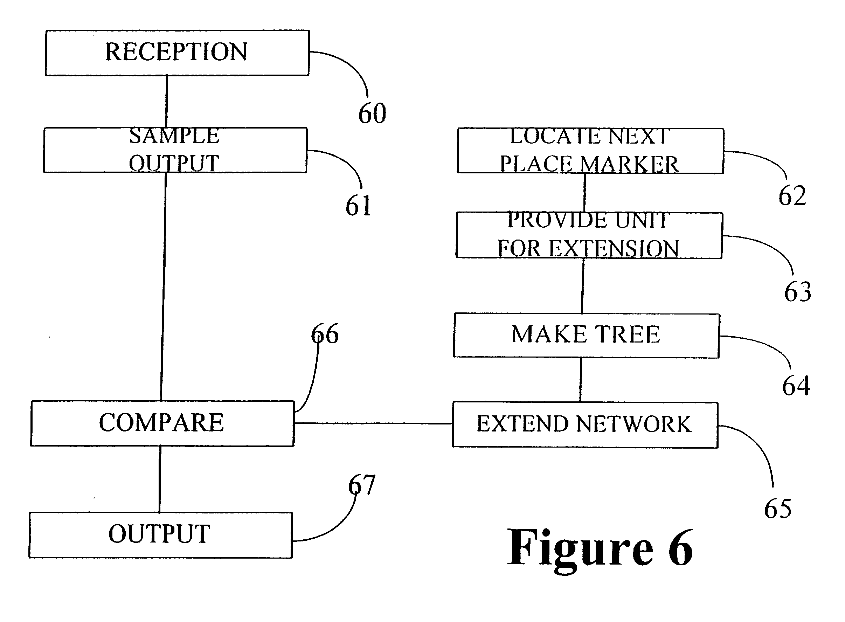

A flow sheet of the method, illustrating an iteration for extending a path, is illustrated in Figure 6.

There are three features of the flow sheet, i.e. the reception and sampling, the comparison and the extension of the network.

The reception is indicated in box 60 of the flow sheet and the sampling in box 61.

Network extension is indicated in boxes 62-64 and it comprises the following major steps.

### BOX 62

The existing network (in the store 51) is scanned and one of the place markers is selected. The place marker determines the point at which the next extension will be added. Usually it also identifies the end of a partial path.

### BOX 63

The extender 50 selects units, in signals representing symbolic phonemes, from the lexicon 57.

### BOX 64

The units selected in box 63 are assembled in the form of a tree of symbolic phonemes. The placer marker selected in box 62 is included as the beginning of the tree.

### BOX 65

The tree assembled in box 64 is converted into model phonemes and the end phonemes are converted into place markers which will be selected in future executions of box 62. The symbolic phoneme in the place marker selected in box 62 is also converted into a model phoneme. These conversions are carried out using the phoneme store 56 (the contents of which are illustrated in Figure 1). After conversion the tree is added to the network which is contained in the store 51.

It is important to recognise that the conversion to model phonemes occurs in box 65 whereas the identification of the phonemes and their contexts is achieved in the previous boxes 63 and 64. When these boxes are executed the end phonemes do not have a context so they cannot be converted. The place markers are compatible with the network even though they are not model phonemes and their use enables the step specified in box 65 to take place because the updating of the place marker by a model element occurs during a later iteration.

### BOX 66

The samples produced in box 61 are compared with the network stored in network store 51 to select a best path.

### BOX 67

The best path is output at box 67.

The iteration illustrated in Figure 6 is repeated for as long as signal is received to keep the process going. In order to help detect the end it is appropriate to include model phonemes which represent channel noise and breath sound. At the start, e.g. before speech is received, the network is initialised using a standard, predetermined configuration. The "silent" elements are particularly suitable for initialisation.

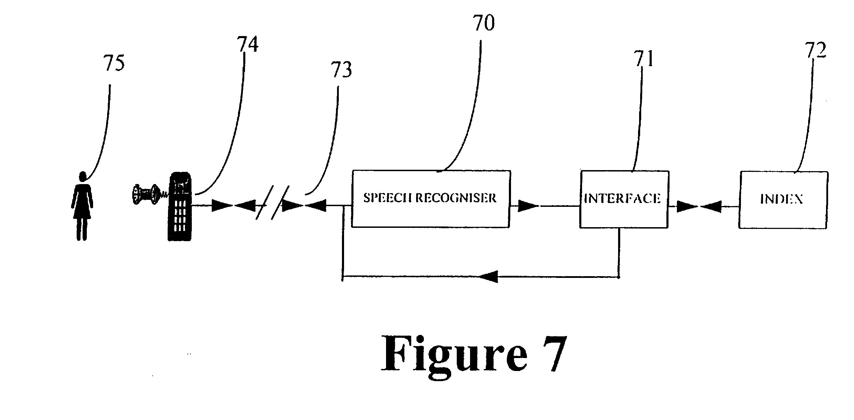

Figure 7 illustrates the use of the invention as automatic voice control either directly or via a telecommunications system, e.g. for directory enquiries or other similar service such as railway timetables or airline services.

A speech recogniser 70 according to the invention is connected to an interface 71 which is adapted to control an index 72 by means of instructions received as speech and identified by the recogniser 70. The recogniser 70 and the interface 71 are connected to a telecommunications system 73 which includes a distant telephone 74 available to a user 75. To interrogate the index 72, the user 75, (by conventional telecommunications technology), accesses the recogniser 70. Spoken requests are transmitted to the recogniser by the system 73. These are identified by the recogniser 70 and passed to the index 72 via the interface 71. Results are returned to the user 75 via the interface 71 and the system 73.

In some applications it is desirable to provide the possibility of checking that instructions have been correctly understood, e.g. by means of a feedback loop. This is conveniently achieved by incorporating a synthetic speech facility in the recogniser 70. This enables the recogniser to identify its interpretations to the user, if necessary via a telecommunications system. It is also possible to display the interpretations on a screen. This checking is inherent in applications such as automatic dictation, especially when the resulting text is displayed on a screen.

In most of these applications there is a possibility that the speech will not be recognised at all. This is regarded as an acceptable result, particularly when this circumstance is notified to the user.

## Claims

1. A method of recognising a speech signal, which method comprises:
(a) receiving (60) said signal and dividing it into a succession of samples (61);
(b) preparing (63) a plurality of paths each of which comprises a succession of model linguistic elements, said models being in a form suitable for comparison with the samples;
(c) comparing (66) the samples with the paths to assess the closeness of match between individual paths and the received signal;
(d) selecting (67) a path which constitutes a best match for the received signal;
wherein at least some of the model elements are context related in that the model takes into account following elements;
characterised in that place markers (12) which define linguistic elements in a form not suitable for said comparison, are inserted into the paths during one extension and thereafter the linguistic elements defined in said place markers are converted to model elements (12b, 12c) during a later extension.

2. A method according to claim 1, wherein each context related model element is based on a triphone consisting of a centre element, a left element and a right element; the model relating to the centre element in the context of the right and left elements.

3. A method according to either of claim 1 or claim 2, wherein extensions are added at locations identified by place markers (12) already in the paths and at least one of the extensions comprises a string of one or more model elements and a new place marker (21, 22, 23, 24), wherein one of the elements (12b, 12c) of the string is a conversion of the model element (12a) defined by the place marker in the path and the new place marker (21, 22, 23,24) identifies a location for future extensions.

4. A method according to any one of the preceding claims, wherein in the paths are organised in the form of a network.

5. A method according to any one of the preceding claims, wherein each sample is in the form of parameters representing the linguistic nature of the sample.

6. A method according to any one of the preceding claims, wherein the input speech is received from a telecommunications system (74).

7. A method according to any one of the preceding claims, which includes the generation of responses to identify the result of the recognition.

8. A method according to claim 7, wherein the said identifications comprise an indication that the input was not identified.

9. A method according to any one of the preceding claims, which includes:
(a) the transmission of the result of the recognition to a computerised index (72),
(b) the retrieval of information from the index (72), and,
(c) the output of the retrieved information.

10. A method according to any one of claim 7, claim 8 or claim 9, which includes transmitting the responses and/or the retrieved information via a telecommunications system (74).

11. A method according to any one of the proceeding claims, wherein each extension is added at a location indicated by a place marker (12a).

12. Apparatus for recognising a speech signal which apparatus comprises:-
(a) a receiver (54) for acquiring the speech signal for conversion,
(b) a parametiser (53) connected to the receiver (54) for converting the acquired signal into a succession of samples in the form of parameters relating to the linguistic nature of the samples,
(c) a path store (51) for containing a plurality of paths said paths comprising model linguistic elements in a form suitable for comparison with parameterised samples,
(d) an extender (50) for producing extensions to paths contained in the path store said extensions being in the form of symbolic elements not suitable for comparison for with parametised samples,
(e) a converter (55) for converting extensions produced by said extender (50) into context related model elements, said converter (55) also being operationally linked to the path store (51) to add said conversions to the network contained in the path store (51).
(f) a comparator (52) operationally linked to the parametiser (53) and the path store (51) for comparing the samples with the paths to select the best match, **CHARACTERISED IN THAT** the converter (55) is adapted to convert elements not having an adequately defined context into place markers and to add said place markers to the network contained in the path store (51), and that said converter (55) is also adapted to locate symbolic elements contained in place markers in said path store (51), to convert them into context related model elements and to add said context related model elements to the path store (51) at the location indicated by the place marker.

13. Apparatus according to claim 12, wherein the converter includes a lexicon store (57) having a plurality of storage locations each of which contains signals defining a linguistic unit recognisable by the apparatus.

14. Apparatus according to either claims 12 or claim 13, wherein the converter contains a triphone store (56) having an access section based on triphones and an output section containing signals defining a model element equivalent to the central element of the triphone.

15. Apparatus according to any one of claims 12, 13 or 14, which is connected to a telecommunications system (73).

## Patentansprüche

1. Verfahren zum Erkennen eines Sprachsignals mit
(a) Empfangen (60) des Signals und Unterteilen desselben in eine Folge von Proben (61);
(b) Erzeugen (63) mehrerer Pfade, von denen jeder eine Folge von Modell-Linguistikelementen aufweist, wobei die Modelle eine zum Vergleich mit den Proben geeignete Form haben;
(c) Vergleichen (66) der Proben mit den Pfaden, um die Treffernähe zwischen einzelnen Pfaden und dem empfangenen Signal zu ermitteln;
(d) Auswählen (67) eines Pfads, der für das empfangene Signal den besten Treffer bildet;
wobei zumindest einige der Modell-Elemente derart kontextbezogen sind, daß das Modell folgende Elemente berücksichtigt;
**dadurch gekennzeichnet**, daß Platzmarkierungen (12), die Linguistikelemente in einer für den Vergleich nicht geeigneten Form definieren, während einer Erweiterung in die Pfade eingefügt werden und danach die in den Platzmarkierungen definierten Linguistikelemente während einer späteren Erweiterung in Modell-Elemente (12b, 12c) umgewandelt werden.

2. Verfahren nach Anspruch 1, bei dem jedes kontextbezogene Modell-Element auf einem Dreiklang beruht, der aus einem mittigen Element, einem linken Element und einem rechten Element besteht, wobei sich das Modell auf das mittige Element im Kontext des rechten und linken Elements bezieht.

3. Verfahren nach Anspruch 1 oder 2, bei dem Erweiterungen an Stellen hinzugefügt werden, die durch schon im Pfad liegende Platzmarkierungen (12) identifiziert sind, wobei zumindest eine Erweiterung eine Folge eines oder mehrerer Modellelemente aufweist und eine neue Platzmarkierung (21, 22, 23, 24), wobei eines der Elemente (12b, 12c) der Folge eine Umwandlung des Modellelements (12a) ist, das durch die Platzmarkierung im Pfad definiert ist, und wobei die neue Platzmarkierung (21, 22, 23, 24) eine Stelle für zukünftige Erweiterungen identifiziert.

4. Verfahren nach einem der vorherigen Ansprüche, bei dem die Pfade in Form eines Netzwerks organisiert sind.

5. Verfahren nach einem der vorherigen Ansprüche, bei dem jede Probe die Form von Parametern hat, die die linguistische Natur der Probe darstellen.

6. Verfahren nach einem der vorherigen Ansprüche, bei dem die eingegebene Sprache von einem Telekommunikationssystem (74) empfangen wird.

7. Verfahren nach einem der vorherigen Ansprüche, das die Erzeugung von Antworten zur Identifizierung des Erkennungsergebnisses aufweist.

8. Verfahren nach Anspruch 7, bei dem die Identifizierung eine Anzeige dahingehend aufweist, daß die Eingabe nicht identifiziert wurde.

9. Verfahren nach einem der vorherigen Ansprüche, mit:
(a) Übertragung des Erkennungsergebnisses an einen computergestützten Index (72),
(b) Gewinnen von Information vom Index (72) und
(c) Ausgeben der gewonnenen Information.

10. Verfahren nach einem der Ansprüche 7 bis 9, mit dem Schritt Übertragen der Antworten und/oder der gewonnenen Information über das Telekommunikationssystem (74).

11. Verfahren nach einem der vorherigen Ansprüche, bei dem jede Erweiterung an einer Stelle hinzugefügt wird, die durch eine Platzmarkierung (12a) angezeigt ist.

12. Vorrichtung zum Erkennen eines Sprachsignals, mit
(a) einem Empfänger (54) zum Aufnehmen des Sprachsignals zur Umwandlung,
(b) einer Parametrisiereinrichtung (53), die mit dem Empfänger (54) verbunden ist, um das aufgenommene Signal in eine Folge von Proben in Form von Parametern, die sich auf die linguistische Natur der Proben beziehen, umzuwandeln,
(c) einem Pfadspeicher (51) für mehrere Pfade, wobei die Pfade modellhafte Linguistikelemente aufweisen, die in einer für den Vergleich mit parametrisierten Proben geeigneten Form vorliegen,
(d) einem Erweiterer (50) zum Erzeugen von Erweiterungen für Pfade im Pfadspeicher, wobei die Erweiterungen in Form symbolischer Elemente vorliegen, die zum Vergleich mit parametrisierten Proben nicht geeignet sind,
(e) einem Umwandler (55) zum Umwandeln der durch den Erweiterer (50) erzeugten Erweiterungen in kontextbezogene Modell-Elemente, wobei der Umwandler (55) funktional auch mit dem Pfadspeicher (51) verknüpft ist, um die Umwandlungen zum im Pfadspeicher (51) enthaltenen Netzwerk hinzuzufügen,
(f) einem Vergleicher (52), der funktional mit dem Parametrisierer (53) und dem Pfadspeicher (51) verknüpft ist, um die Proben mit dem Pfad zu vergleichen und den besten Treffer auszuwählen,
dadurch gekennzeichnet, daß
der Umwandler (55) dazu ausgelegt ist, Elemente mit ungenügend definiertem Kontext in Platzmarkierungen umzuwandeln und diese Platzmarkierungen dem im Pfadspeicher (51) enthaltenen Netzwerk hinzuzufügen, und daß der Umwandler (55) auch dazu ausgelegt ist, symbolische Elemente in den Platzmarkierungen im Pfadspeicher (51) zu lokalisieren, sie in kontextbezogene Modell-Elemente umzuwandeln und die kontextbezogenen Modell-Elemente zum Pfadspeicher (51) an einer durch die Platzmarkierung angegebenen Stelle hinzuzufügen.

13. Vorrichtung nach Anspruch 12, bei der der Umwandler einen Lexikonspeicher (57) aufweist, der mehrere Speicherplätze hat, von denen jeder Signale aufweist, die eine durch die Vorrichtung erkennbare linguistische Einheit definieren.

14. Vorrichtung nach Anspruch 12 oder 13, bei der der Umwandler einen Dreiklangspeicher (56) aufweist, der einen auf Dreiklängen basierenden Zugangsabschnitt und einen Ausgangsabschnitt hat, der Signale enthält, die ein Modell-Element definieren, das äquivalent zum mittigen Element des Dreiklangs ist.

15. Vorrichtung nach einem der Ansprüche 12 bis 14, der mit einem Telekommunikationssystem (73) verbunden ist.

## Revendications

1. Procédé de reconnaissance d'un signal vocal, lequel procédé comprend :
(a) la réception (60) dudit signal et sa division en une succession d'échantillons (61),
(b) la préparation (63) d'une pluralité de trajets dont chacun comprend une succession d'éléments linguistiques modélisés, lesdits modèles étant sous une forme convenant à une comparaison avec les échantillons,
(c) la comparaison (66) des échantillons avec les trajets afin d'estimer la pertinence de la mise en correspondance entre des trajets individuels et le signal reçu,
(d) la sélection (67) d'un trajet qui constitue une correspondance la meilleure pour le signal reçu,
dans lequel au moins certains des éléments modélisés sont liés par le contexte en ce que le modèle prend en compte les éléments suivants,
caractérisé en ce que des marqueurs d'emplacement (12) qui définissent des éléments linguistiques sous une forme qui ne convient pas à ladite comparaison, sont insérés dans les trajets durant une première extension et ensuite les éléments linguistiques définis dans lesdits marqueurs d'emplacement sont convertis en des éléments modélisés (12b, 12c) durant une extension ultérieure.

2. Procédé selon la revendication 1, dans lequel chaque élément modélisé lié au contexte est fondé sur un triphone constitué d'un élément central, d'un élément de gauche et d'un élément de droite. Le modèle reliant l'élément central dans le contexte des éléments de droite et de gauche.

3. Procédé selon soit la revendication 1, soit la revendication 2, dans lequel des extensions sont ajoutées à des emplacements identifiés par des marqueurs d'emplacement (12) figurant déjà dans les trajets et au moins l'une des extensions comprend une chaîne d'un ou plusieurs éléments modélisés et un nouveau marqueur d'emplacement (21, 22, 23, 24), dans lequel l'un des éléments (12b, 12c) de la chaîne est une conversion de l'élément modélisé (12a) définie par le marqueur d'emplacement dans le trajet et le nouveau marqueur d'emplacement (21, 22, 23, 24) identifie un emplacement en vue d'extensions futures.

4. Procédé selon l'une quelconque des revendications précédentes, dans lequel les trajets sont organisés sous forme d'un réseau.

5. Procédé selon l'une quelconque des revendications précédentes, dans lequel chaque échantillon est sous forme de paramètres représentant la nature linguistique de l'échantillon.

6. Procédé selon l'une quelconque des revendications précédentes, dans lequel la parole en entrée est reçue depuis un système de télécommunications (74).

7. Procédé selon l'une quelconque des revendications précédentes, qui comprend la génération de réponses afin d'identifier le résultat de la reconnaissance.

8. Procédé selon la revendication 7, dans lequel lesdites identifications comprennent une indication de ce que l'entrée n'a pas été identifiée.

9. Procédé selon l'une quelconque des revendications précédentes, qui comprend :
(a) la transmission du résultat de la reconnaissance vers un indicateur informatisé (72),
(b) la récupération des informations à partir de l'indicateur (72), et
(c) la sortie des informations récupérées.

10. Procédé selon l'une quelconque de la revendication 7, la revendication 8 ou la revendication 9, qui comprend la transmission des réponses et/ou des informations récupérées par l'intermédiaire d'un système de télécommunications (74).

11. Procédé selon l'une quelconque des revendications précédentes, dans lequel chaque extension est ajoutée en un emplacement indiqué par un marqueur d'emplacement (12a).

12. Dispositif destiné à reconnaître un signal vocal, lequel dispositif comprend :
(a) un récepteur (54) destiné à acquérir le signal vocal en vue d'une conversion,
(b) un module de paramétrage (53) relié au récepteur (54) afin de convertir le signal acquis en une succession d'échantillons sous forme de paramètres se rapportant à la nature linguistique des échantillons,
(c) une mémoire de trajets (51) destinée à contenir un certain nombre de trajets, lesdits trajets comprenant des éléments linguistiques modélisés sous une forme convenant à une comparaison avec des échantillons paramétrés,
(d) un module d'extension (50) destiné à produire des extensions à des trajets contenus dans la mémoire de trajets, lesdites extensions étant sous forme d'éléments symboliques ne convenant pas à une comparaison avec des échantillons paramétrés,
(e) un convertisseur (55) destiné à convertir des extensions produites par ledit module d'extension (50) en des éléments modélisés liés au contexte, ledit convertisseur (55) étant également lié de façon fonctionnelle à la mémoire de trajets (51) afin d'ajouter lesdites conversions au réseau contenu dans la mémoire de trajets (51),
(f) un comparateur (52) relié de façon fonctionnelle au module de paramétrage (53) et à la mémoire de trajets (51) afin de comparer les échantillons aux trajets en vue de sélectionner la correspondance la meilleure, caractérisé en ce que le convertisseur (55) est conçu pour convertir des éléments ne présentant pas un contexte défini de façon adéquate en des marqueurs d'emplacement et pour ajouter lesdits marqueurs d'emplacement au réseau contenu dans la mémoire de trajets (51), et en ce que ledit convertisseur (55) est également conçu pour localiser des éléments symboliques contenus dans des marqueurs d'emplacement dans ladite mémoire de trajets (51) afin de les convertir en des éléments modélisés liés au contexte et d'ajouter lesdits éléments modélisés liés au contexte à la mémoire de trajets (51) à l'emplacement indiqué par le marqueur d'emplacement.

13. Dispositif selon la revendication 12, dans lequel le convertisseur comprend une mémoire de lexique (57) comportant un certain nombre d'emplacements de mémorisation dont chacun contient des signaux définissant une unité linguistique pouvant être reconnue par le dispositif.

14. Dispositif selon soit la revendication 12 soit la revendication 13, dans lequel le convertisseur contient une mémoire de triphones (56) comportant une section d'accès fondée sur des triphones et une section de sortie contenant des signaux définissant un élément modélisé équivalent à l'élément central du triphone.

15. Dispositif selon l'une quelconque des revendications 12, 13 ou 14, qui est relié à un système de télécommunications (73).
